# FASCICULE DE BREVET EUROPEEN

(11) **EP 4 121 730 B1**
(45) Date de publication et mention de la délivrance du brevet: **04.06.2025**
(21) Numéro de dépôt: 21714650.5
(22) Date de dépôt: 04.03.2021
(51) Int. Cl.: G01L 5/105, D07B 1/14, G01D 5/353, G01M 5/00, G01M 11/08

(54) **ENSEMBLE COMPORTANT UN ASSEMBLAGE DE BRINS ET UN DISPOSITIF DE DIAGNOSTIC DE L'ETAT DE L'ASSEMBLAGE DE BRINS**
ANORDNUNG MIT EINEM SATZ VON STRÄNGEN UND EINER DIAGNOSEVORRICHTUNG ZUR DIAGNOSE DES ZUSTANDS EINES SATZES VON STRÄNGEN
ASSEMBLY COMPRISING A SET OF STRANDS AND A DIAGNOSTIC DEVICE FOR DIAGNOSING THE STATE OF THE SET OF STRANDS

(30) Priorité: 19.03.2020 FR 2002686
(43) Date de publication de la demande: 25.01.2023
(73) Titulaire: ICAM Ouest, 44470 Carquefou (FR); NANTES UNIVERSITÉ, 44035 Nantes Cedex 1 (FR)
(72) Inventeur: DECUREY, Benjamin, 44300 Nantes (FR); GAILLARD, Virginie, 44240 Sucé-sur-Erdre (FR); GIRARD, Marion, 44600 Saint-Nazaire (FR); GRANGEAT, Romain, 44600 Saint-Nazaire (FR); JACQUEMIN, Frédéric, 44320 Saint-Viaud (FR); LECIEUX, Yann, 44100 Nantes (FR); LEDUC, Dominique, 44000 Nantes (FR); LUPI, Cyril, 44300 Nantes (FR)
(74) Mandataire: Novagraaf Technologies
(86) Numéro de dépôt international: PCT/FR2021/050367
(87) Numéro de publication internationale: WO 2021/186117

(56) Documents cités:
- JP-A- S61 104 237
- US-A- 6 127 672
- US-A1- 2002 088 931
- US-A1- 2003 154 802
- US-A1- 2005 226 584
- US-A1- 2014 305 744

## Description

### Domaine technique de l'invention

La présente invention concerne le domaine de la détection de dégradations dans un assemblage de brins.

L'invention trouve une application privilégiée dans le domaine des câbles immergés comme les câbles d'amarrage et permet de détecter une rupture du câble ou une dégradation des performances mécaniques de ce dernier.

Cependant, l'invention ne se limite pas à un tel domaine d'application et se rapporte, de manière générale, aux matériaux comportant un assemblage de brins, les brins s'étendant principalement dans une direction dite de tension selon laquelle l'assemblage de brins est destiné à subir des efforts de tension. Ainsi, l'invention peut s'appliquer aux cordages, aux bandes de tissu, aux sangles ou aux matériaux composites.

L'invention concerne plus particulièrement un ensemble comportant un assemblage de brins et un dispositif de diagnostic de l'état de l'assemblage de brins.

### Arrière-plan technique

Les câbles d'amarrage ou d'ancrage sont des structures immergées dont l'état mécanique ne peut pas être contrôlé à l'œil nu lorsqu'ils sont en cours d'utilisation.

Il est connu d'insérer une fibre optique en silice dans un câble et de coupler ce câble avec un dispositif de diagnostic. Le dispositif de diagnostic comporte une source lumineuse agencée pour envoyer un faisceau lumineux se propageant dans la fibre et un capteur optique apte à fournir un signal représentatif de l'intensité lumineuse du faisceau en sortie de la fibre optique. Ainsi, le dispositif de diagnostic permet de détecter une rupture de la fibre optique lorsque l'intensité lumineuse mesurée est nulle.

Cependant, la silice est un matériau qui présente une faible résistance mécanique en tension. Les brins d'un câble d'amarrage sont réalisés dans un matériau présentant une résistance mécanique en tension bien supérieure à celle de la silice. Ainsi, l'état d'une fibre optique en silice intégrée dans un câble d'amarrage n'est pas représentatif de l'état des brins structurels du câble. Il en résulte un manque de fiabilité et de performance des dispositifs de diagnostic de l'état d'un câble de l'art antérieur.

Les documents US2002/088931, US2005/226584, US2003/154802, US2014/305744, JPS61104237 et US6127672 donnent des exemples de dispositifs de mesures dans des brins flexibles.

### Résumé de l'invention

L'invention propose un ensemble comportant un assemblage de brins selon la revendication 1.

Selon d'autres caractéristiques de l'invention :
- l'extrémité d'entrée et l'extrémité de sortie sont une seule et même extrémité de la fibre de diagnostic et la fibre de diagnostic comporte une extrémité distale opposée à l'extrémité d'entrée et réfléchissant la lumière à l'intérieur de la fibre de diagnostic,
- la fibre de diagnostic est pliée en deux de sorte que l'extrémité d'entrée et l'extrémité de sortie sont juxtaposées,
- le dispositif de diagnostic comporte en outre un deuxième capteur optique, et une lame séparatrice agencée pour séparer un faisceau lumineux issu de la source lumineuse en un premier faisceau envoyé dans la fibre de diagnostic et un deuxième faisceau envoyé dans le deuxième capteur optique
- l'assemblage de brins comporte plusieurs fibres de diagnostic, et le premier capteur optique est une caméra générant des images des extrémités de sortie des fibres de diagnostic,
- l'ensemble comporte un module de communication programmé pour transmettre le signal du ou des capteurs optiques à une unité de contrôle distante.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue en perspective d'un câble d'amarrage enroulé ;
[Fig.2] - la figure 2 est une vue en perspective d'une extrémité du câble d'amarrage de la figure 1 une fois celle-ci attachée à une barge flottante ;
[Fig.3] - la figure 3 est un schéma fonctionnel d'un ensemble selon un mode de réalisation de l'invention ;
[Fig.4] - la figure 4 est une vue schématique en perspective d'une coupe transversale d'un assemblage de brins selon un mode de réalisation ne faisant pas partie de l'invention ;
[Fig.5] - la figure 5 est une vue schématique en perspective d'un assemblage de brins selon un premier mode de réalisation de l'invention ;
[Fig.6] - la figure 6 est une vue schématique en perspective d'un assemblage de brins selon un deuxième mode de réalisation de l'invention ;
[Fig.7] - la figure 7 est une image d'une extrémité d'un assemblage de brins donnée par une caméra d'un dispositif de diagnostic selon un mode de réalisation de l'invention.

### Description détaillée de l'invention

Dans la description qui va suivre, des éléments identiques, similaires ou analogues seront désignés par les mêmes chiffres de référence.

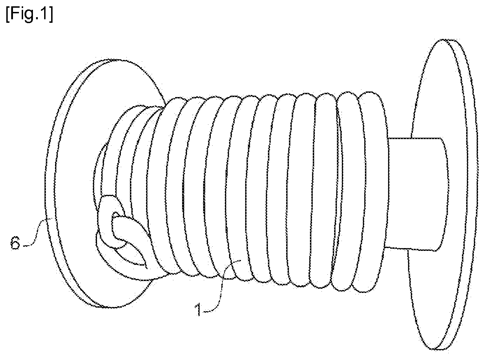

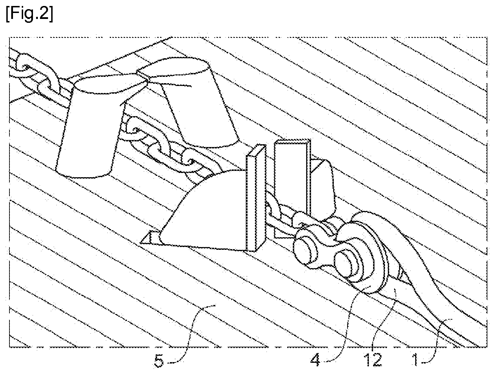

L'invention est décrite plus particulièrement dans le cadre de son application à un câble d'amarrage tel que celui représenté en figures 1 et 2.

Le câble d'amarrage constitue un assemblage 1 de brins. A la figure 1, le câble est représenté enroulé autour d'un support 6. Il n'est alors pas en service. A la figure 2, le câble est mis en service et déployé sur une plateforme 5. Le câble comporte une extrémité formant une boucle 12 engagée sur une poulie 4 attachée à la plateforme 5. En service, le câble comporte une portion immergée pratiquement sur toute sa longueur.

Cependant, comme mentionné plus haut, d'autres exemples ne faisant pas partie de l'invention peuvent s'appliquer aux cordages, aux bandes de tissu, aux sangles ou aux matériaux composites.

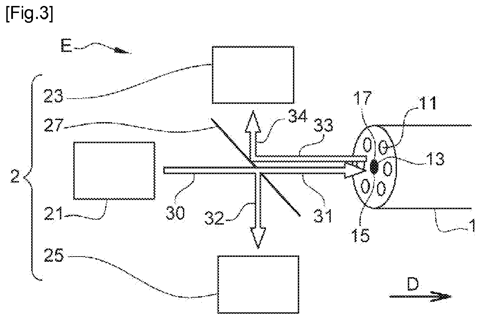

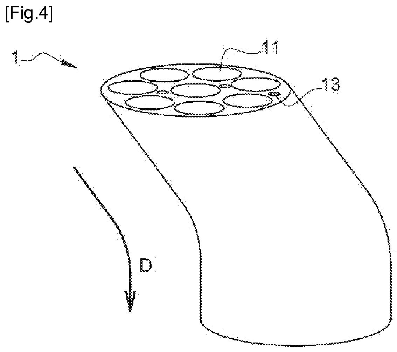

Il est fait maintenant référence aux figures 3 et 4 pour décrire un ensemble E.

L'ensemble E comporte un assemblage 1 de brins et un dispositif de diagnostic 2.

L'assemblage 1 comporte des brins 11 réalisés dans un même matériau. Les brins 11 s'étendent principalement dans une direction D de tension selon laquelle l'assemblage 1 de brins 11 est destiné à subir des efforts de tension. Les brins 11 peuvent être maintenus ensemble de différentes manières. Les brins peuvent être :
- tortillés et/ou tressés ensemble,
- tissés ensemble,
- liés ensemble, par exemple par une gaine,
- collés ensemble, par exemple par un polymère thermodurcissable ou thermoplastique.

Selon une caractéristique particulière de l'invention, l'assemblage 1 de brins comporte des fibres de diagnostic 13.

Chaque fibre de diagnostic 13 est conductrice de lumière. En d'autres termes, chaque fibre est transparente au moins pour certaines longueurs d'ondes lumineuses. La lumière se propage dans la fibre de diagnostic 13 entre une extrémité d'entrée 15 et une extrémité de sortie 17.

La fibre de diagnostic 13 est en nylon transparent. En variante, la fibre de diagnostic 13 peut être réalisée en poly-méthacrylate de méthyle, communément abrégé en « PMMA » dérivé du terme anglais « poly-methyl methacrylate ».

Les fibres de diagnostic 13 s'étendent principalement selon la direction D de tension. Les fibres de diagnostic 13 sont intégrées dans l'assemblage 1 de la même manière que les brins 11. Les fibres peuvent être :
- tortillés et/ou tressés avec les brins 11,
- tissés avec les brins 11,
- liés avec les brins 11, par exemple par une gaine,
- collés avec les brins, par exemple par un polymère thermodurcissable ou thermoplastique.

Chaque fibre de diagnostic 13 a une résistance mécanique en tension identique à celle des brins 11. Dans un exemple ne faisant pas partie de l'invention, la fibre de diagnostic 13 a une résistance mécanique en tension égale à celle d'un des brins 11 à 5% près.

Selon l'invention, les fibres de diagnostic 13 sont des brins 11 de l'assemblage 1 eux-mêmes. Ceci est possible lorsque les brins 11 sont conducteurs de lumière au moins pour certaines longueurs d'ondes lumineuses, comme c'est le cas par exemple pour des brins 11 réalisés en nylon transparent.

Dans ce cas, certains des brins 11 de l'assemblage 1 sont à la fois conçus pour subir des efforts de tension et à la fois utilisés pour le diagnostic de l'état mécanique du brin 11 lui-même et ainsi détecter une quelconque dégradation via des mesures d'intensité lumineuse à l'intérieur du brin 11 conducteur de lumière.

Selon un exemple ne faisant pas partie de l'invention, les fibres de diagnostic 13 sont des fibres optiques distinctes des brins 11 de l'assemblage 1. Les fibres de diagnostic 13 s'étendent sur toute la longueur de l'assemblage 1 de brins.

Le dispositif de diagnostic 2 comporte une source lumineuse 21, un premier capteur optique 23, un deuxième capteur optique 25 et une lame séparatrice 27.

La source lumineuse 21 émet un faisceau lumineux primaire 30.

La source lumineuse est par exemple un laser. Le faisceau lumineux 31 entrant dans la fibre de diagnostic 13 est alors spatialement et temporellement cohérent.

En variante, la source lumineuse 21 peut être une lampe ou une diode électroluminescente, terme communément abrégé en « DEL » en Français ou en « LED » en anglais.

La lame séparatrice 27 et cube séparateur de faisceau est agencée pour séparer le faisceau lumineux primaire 30 issu de la source lumineuse 21 en un premier faisceau 31 envoyé dans la fibre de diagnostic 13 au niveau de l'extrémité d'entrée 15 et un deuxième faisceau 32 envoyé dans le deuxième capteur optique 25.

Le faisceau lumineux 31 est envoyé dans la fibre de diagnostic 13. Une partie du faisceau lumineux 31 se propage dans la fibre de diagnostic 13 et ressort sous forme d'un faisceau de sortie 33. La lame séparatrice 27 intercepte le faisceau de sortie 33. Une part du faisceau de sortie 33 est réfléchi sous forme d'un faisceau de mesure 34. Le faisceau de mesure 34 pénètre dans le premier capteur optique 23.

Le premier capteur optique 23 est apte à fournir un signal représentatif de l'intensité lumineuse dans l'extrémité de sortie 17 de la fibre de diagnostic 13. Le premier capteur optique 23 est par exemple un photo-détecteur comme une photodiode ou une caméra couplée à un dispositif de traitement d'image.

L'intensité lumineuse dans l'extrémité de sortie 17 de la fibre de diagnostic 13 est corrélée à l'état mécanique de la fibre de diagnostic 13. Lorsque la fibre de diagnostic 13 est en bon état, l'intensité lumineuse mesurée dans l'extrémité de sortie 17 est maximale, lorsque la fibre de diagnostic 13 est rompue, l'intensité lumineuse mesurée dans l'extrémité de sortie 17 est nulle et lorsque la fibre de diagnostic 13 est endommagée, l'intensité lumineuse mesurée dans l'extrémité de sortie 17 a une valeur intermédiaire entre la valeur maximale et la valeur nulle.

Le deuxième capteur optique 25 est apte à fournir un signal représentatif de l'intensité lumineuse du deuxième faisceau 32. Le deuxième capteur optique 25 est par exemple un photo-détecteur comme une photodiode.

Le deuxième capteur optique 25 permet de détecter une défaillance de la source lumineuse 21. En particulier, le deuxième capteur optique 25 permet de déterminer la cause d'une mesure d'intensité par le premier capteur optique 23 inférieure à la valeur maximale. Cette cause est soit une défaillance de la source lumineuse 21, soit une détérioration de la fibre de diagnostic 13. Le deuxième capteur optique 25 permet d'éviter de détecter à tort une détérioration de la fibre de diagnostic 13.

Lorsque l'assemblage 1 de brins 11 est un câble partiellement immergé, il est avantageux que les composants électroniques du dispositif de diagnostic 2 tels que la source lumineuse 21, le premier capteur optique 23, et le deuxième capteur optique 25 soient placés à une extrémité émergée du câble pour limiter la détérioration des composants électroniques par l'eau, notamment par l'eau de mer. Dans ce cas, l'extrémité d'entrée 15 et l'extrémité de sortie 17 des fibres de diagnostic 13 doivent être placées toutes deux dans une extrémité émergé du câble.

Dans l'exemple des figures 1 et 2, l'extrémité d'entrée 15 et l'extrémité de sortie 17 des fibres de diagnostic 13 sont placées dans la boucle 12. Le dispositif de diagnostic 2 peut être également intégré dans la boucle 12 représentée.

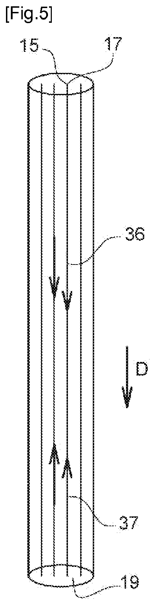

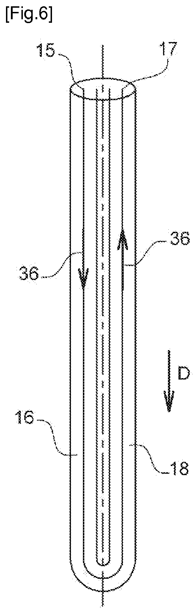

Les figures 5 et 6 illustrent respectivement deux modes de réalisation de l'invention dans lesquels l'extrémité d'entrée 15 et l'extrémité de sortie 17 des fibres de diagnostic 13 sont placées toutes deux à une même extrémité du câble.

A la figure 5, l'extrémité d'entrée 15 et l'extrémité de sortie 17 sont une seule et même extrémité de la fibre de diagnostic 13. La fibre de diagnostic 13 comporte une extrémité distale 19 opposée à l'extrémité d'entrée 15.

L'extrémité distale 19 est agencée pour réfléchir la lumière à l'intérieur de la fibre de diagnostic 13. Par exemple, l'extrémité distale 19 présente un clivage droit permettant une réflexion de Fresnel d'un faisceau incident 36 en un faisceau réfléchi 37. La source lumineuse 21 envoie un faisceau lumineux 31 dans la fibre de diagnostic 13 au niveau de l'extrémité d'entrée 15, le faisceau incident 36 correspond à une partie du faisceau lumineux 31 ayant pénétré dans la fibre de diagnostic 13. Ensuite, le faisceau incident 36 est réfléchi en un faisceau réfléchi 37. Une partie du faisceau réfléchi 37 sort de la fibre de diagnostic 13 au niveau de l'extrémité de sortie 17 sous forme du faisceau de sortie 33.

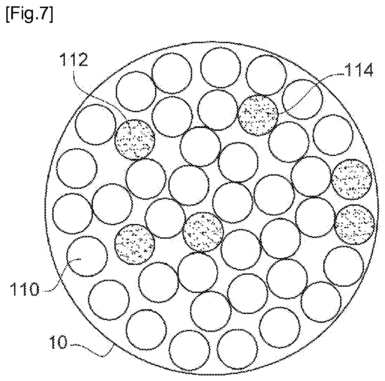

A la figure 6, la fibre de diagnostic 13 est pliée en deux de sorte que l'extrémité d'entrée 15 et l'extrémité de sortie 17 sont juxtaposées. Plus généralement, tous les brins de l'assemblage de la figure 7 sont pliés en deux parties et l'assemblage comporte une première portion 16 comportant l'ensemble des premières parties des brins et une deuxième portion 18 comportant l'ensemble des deuxièmes parties des brins. La source lumineuse 21 envoie un faisceau lumineux 31 dans la fibre de diagnostic 13 au niveau de l'extrémité d'entrée 15, le faisceau incident 36 correspond à une partie du faisceau lumineux 31 ayant pénétré dans la fibre 13. Ensuite, le faisceau incident 36 se propage jusqu'à l'extrémité de sortie 17. Une partie du faisceau incident sort de la fibre 13 au niveau de l'extrémité de sortie 17 sous forme du faisceau de sortie 33.

En variante, l'extrémité d'entrée 15 et l'extrémité de sortie 17 sont à deux extrémités distinctes de l'assemblage de brins. Dans ce cas, le premier capteur optique 23, situé à l'extrémité de sortie 17, est distant du reste des composants du dispositif de diagnostic 2, situés à l'extrémité d'entrée 15. Une communication de données peut être établie entre le premier capteur optique 23 et certains des autres composants du dispositif de diagnostic 2.

Dans l'exemple de la figure 7, le premier capteur optique 23 est une caméra. La figure 7 représente une image 10 d'une extrémité d'un assemblage de brins donnée par la caméra. Dans cet assemblage de brins, les fibres de diagnostics sont les brins eux-mêmes. L'image 10 comporte des points blancs 110 correspondant à des brins intacts, des points grisés 112 correspondant à des brins endommagés et des points noirs 114 correspondant à des brins rompus. L'image 10 permet de connaître l'état mécanique précis d'un assemblage de brins de manière fiable et performante.

Les données fournies par le dispositif de diagnostic 2 peuvent permettre de déterminer une durée de vie de l'assemblage de brins, par exemple grâce à une analyse de l'image 10 en fonction de critères prédéfinis. Ces critères peuvent être le taux de brins intacts, le taux de brins endommagés et le taux de brins rompus.

Le dispositif de diagnostic 2 comporte une alimentation électrique. Pour permettre une autonomie du dispositif de diagnostic 2, l'alimentation électrique peut être une batterie. Le dispositif de diagnostic 2 peut comporter un boîtier étanche permettant de de protéger les composants électroniques et optiques du dispositif de diagnostic 2.

L'ensemble E peut comporter un module de communication programmé pour transmettre le signal du ou des capteurs optiques 23, 25 à une unité de contrôle distante. Les données peuvent être transmises au moyen d'ondes acoustiques ou de câbles électriques. Ceci permet de réaliser un diagnostic à distance d'un assemblage de brins. Le diagnostic peut être réalisé en temps réel.

On comprendra que diverses modifications et/ou améliorations évidentes pour l'homme du métier peuvent être apportées aux différents modes de réalisation de l'invention décrits ou évoqués dans la présente description sans sortir du cadre de de l'invention défini par les revendications annexées.

## Revendications

1. Ensemble (E) comportant un assemblage (1) de brins (11) constituant un câble d'amarrage et/ou d'ancrage,
les brins (11) s'étendant principalement dans une direction D dite de tension selon laquelle l'assemblage (1) de brins (11) est destiné à subir des efforts de tension,
**caractérisé en ce que** tous les brins (11) constituant l'assemblage (1) sont réalisés dans un même matériau avec la même résistance mécanique en tension,
les brins (11) sont en nylon transparent et conducteurs de lumière au moins pour certaines longueurs d'ondes lumineuses,
**en ce qu'**au moins un brin (11) de l'assemblage (1) constitue une fibre (13) de diagnostic de sorte que la fibre (13) de diagnostic est conductrice de lumière, la lumière se propageant dans la fibre (13) de diagnostic entre une extrémité d'entrée (15) et une extrémité de sortie (17),
et **en ce que** l'ensemble (E) comprend un dispositif de diagnostic (2) comportant :
- une source lumineuse (21) agencée pour envoyer un faisceau lumineux (31) dans la fibre (13) de diagnostic au niveau de l'extrémité d'entrée (15),
- un premier capteur optique (23) apte à fournir un signal représentatif de l'intensité lumineuse dans l'extrémité de sortie (17) de la fibre (13) de diagnostic, l'intensité lumineuse dans l'extrémité de sortie (17) de la fibre (13) de diagnostic étant corrélée à l'état mécanique de la fibre (13) de diagnostic.

2. Ensemble (E) selon l'une quelconque des revendications précédentes, **caractérisé en ce que** l'extrémité d'entrée (15) et l'extrémité de sortie (17) sont une seule et même extrémité de la fibre (13) de diagnostic et **en ce que** la fibre (13) de diagnostic comporte une extrémité distale (19) opposée à l'extrémité d'entrée (15) et réfléchissant la lumière à l'intérieur de la fibre (13) de diagnostic.

3. Ensemble (E) selon la revendication 1, **caractérisé en ce que** la fibre (13) de diagnostic est pliée en deux de sorte que l'extrémité d'entrée (15) et l'extrémité de sortie (17) sont juxtaposées.

4. Ensemble (E) selon l'une quelconque des revendications précédentes, **caractérisé en ce que** le dispositif de diagnostic (2) comporte en outre :
- un deuxième capteur optique (25), et
- une lame séparatrice (27) agencée pour séparer un faisceau lumineux (30) issu de la source lumineuse (21) en un premier faisceau (31) envoyé dans la fibre (13) de diagnostic et un deuxième faisceau (32) envoyé dans le deuxième capteur optique (25).

5. Ensemble (E) selon l'une quelconque des revendications précédentes, **caractérisé :**
- **en ce que** l'assemblage (1) de brins (11) comporte plusieurs fibres (13) de diagnostic, et
- **en ce que** le premier capteur optique (23) est une caméra générant des images des extrémités de sortie (17) des fibres (13) de diagnostic.

6. Ensemble (E) selon l'une quelconque des revendications précédentes, **caractérisé en ce qu'**il comporte un module de communication programmé pour transmettre le signal du ou des capteurs optiques (23, 25) à une unité de contrôle distante.

## Patentansprüche

1. Baugruppe (E), die eine Anordnung (1) aus Adern (11) umfasst, die ein Festmach- und/oder Ankerkabel bildet,
wobei sich die Adern (11) hauptsächlich in einer sogenannten Zugrichtung D erstrecken, in der die Anordnung (1) aus Adern (11) dazu bestimmt ist, Zugkräften ausgesetzt zu werden,
**dadurch gekennzeichnet, dass** alle Adern (11), die die Anordnung (1) bilden, aus einem gleichen Material mit der gleichen mechanischen Zugfestigkeit hergestellt sind,
die Adern (11) aus transparentem Nylon sind und Lichtleiter mindestens für gewisse Lichtwellenlängen sind,
dass mindestens eine Ader (11) der Anordnung (1) eine Diagnosefaser (13) bildet, sodass die Diagnosefaser (13) lichtleitend ist, das Licht sich in der Diagnosefaser (13) zwischen einem Eingangsende (15) und einem Ausgangsende (17) ausbreitet,
und dass die Baugruppe (E) eine Diagnosevorrichtung (2) umfasst, die aufweist:
- eine Lichtquelle (21), die zum Abgeben eines Lichtstrahls (31) in die Diagnosefaser (13) an dem Eingangsende (15) eingerichtet ist,
- einen ersten optischen Sensor (23), der geeignet ist, um ein Signal bereitzustellen, das die Lichtintensität an dem Ausgangsende (17) der Diagnosefaser (13) darstellt, wobei die Lichtintensität an dem Ausgangsende (17) der Diagnosefaser (13) mit dem mechanischen Zustand der Diagnosefaser (13) korreliert.

2. Baugruppe (E) nach einem der vorstehenden Ansprüche,
**dadurch gekennzeichnet, dass** das Eingangsende (15) und das Ausgangsende (17) ein und dasselbe Ende der Diagnosefaser (13) sind und dass die Diagnosefaser (13) ein distales Ende (19) aufweist, das dem Eingangsende (15) gegenüberliegt und das Licht innerhalb der Diagnosefaser (13) reflektiert.

3. Baugruppe (E) nach Anspruch 1, **dadurch gekennzeichnet, dass** die Diagnosefaser (13) in zwei Hälften gefaltet ist, so dass das Eingangsende (15) und das Ausgangsende (17) nebeneinander liegen.

4. Baugruppe (E) nach einem der vorstehenden Ansprüche,
**dadurch gekennzeichnet, dass** die Diagnosevorrichtung (2) ferner aufweist:
- einen zweiten optischen Sensor (25), und
- eine Teilerplatte (27), die zum Teilen eines Lichtstrahls (30), der von der Lichtquelle (21) stammt, in einen ersten Strahl (31), der in der Diagnosefaser (13) abgegeben wird, und einen zweiten Strahl (32), der in dem zweiten optischen Sensor (25) abgegeben wird, eingerichtet ist.

5. Baugruppe (E) nach einem der vorstehenden Ansprüche,
**dadurch gekennzeichnet:**
- **dass** die Anordnung (1) aus Adern (11) mehrere Diagnosefasern (13) aufweist, und
- **dass** der erste optische Sensor (23) eine Kamera ist, die Bilder der Ausgangsenden (17) der Diagnosefasern (13) erzeugt.

6. Baugruppe (E) nach einem der vorstehenden Ansprüche,
**dadurch gekennzeichnet, dass** sie ein Kommunikationsmodul aufweist, das zum Übertragen des Signals des oder der optischen Sensoren (23, 25) an eine Fernsteuerungseinheit programmiert ist.

## Claims

1. An assembly (E) comprising a set (1) of strands (11) forming a mooring and/or anchor cable, the strands (11) extending mainly in a so-called direction D of tension in which the set (1) of strands (11) is intended to experience tensile stresses,
**characterized in that** all the strands (11) that form the set (1) are made from the same material with the same mechanical tensile strength,
the strands (11) are made of transparent nylon and able to conduct light at least for certain wavelengths of light,
**in that** at least one strand (11) of the set (1) forms a diagnostic fiber (13) so that the diagnostic fiber (13) is able to conduct light, the light propagating through the diagnostic fiber (13) between an entrance end (15) and an exit end (17),
and **in that** the assembly (E) comprises a diagnostic device (2) comprising:
- a light source (21) arranged to send a light beam (31) into the diagnostic fiber (13) at the entrance end (15),
- a first optical sensor (23) capable of delivering a signal representative of the light intensity in the exit end (17) of the diagnostic fiber (13), the light intensity in the exit end (17) of the diagnostic fiber (13) being correlated to the mechanical state of the diagnostic fiber (13).

2. The assembly (E) according to any one of the preceding claims, **characterized in that** the entrance end (15) and the exit end (17) are one and the same end of the diagnostic fiber (13) and **in that** the diagnostic fiber (13) comprises a distal end (19) opposite the entrance end (15) and reflecting the light inside the diagnostic fiber (13).

3. The assembly (E) according to claim 1, **characterized in that** the diagnostic fiber (13) is folded in two so that the entrance end (15) and the exit end (17) are juxtaposed.

4. The assembly (E) according to any one of the preceding claims, **characterized in that** the diagnostic device (2) further comprises:
- a second optical sensor (25), and
- a beam splitter (27) arranged to split a light beam (30) from the light source (21) into a first beam (31) sent into the diagnostic fiber (13) and a second beam (32) sent into the second optical sensor (25).

5. The assembly (E) according to any one of the preceding claims, **characterized:**
- **in that** the set (1) of strands (11) comprises several diagnostic fibers (13), and
- **in that** the first optical sensor (23) is a camera generating images of the exit ends (17) of the diagnostic fibers (13).

6. The assembly (E) according to any one of the preceding claims, **characterized in that** it comprises a communication module programmed to send the signal from the optical sensor or sensors (23, 25) to a remote control unit.
